# EUROPÄISCHE PATENTSCHRIFT

(11) **EP 2 341 190 B1**
(45) Veröffentlichungstag und Bekanntmachung des Hinweises auf die Patenterteilung: **10.10.2012**
(21) Anmeldenummer: 10014774.3
(22) Anmeldetag: 19.11.2010
(51) Int. Cl.: E02F 9/12, E02F 9/22

(54) **Mobiles Arbeitsgerät mit hydraulische Anordnung**
Mobile working machine with a hydraulic assembly
Engin mobil avec un agencement hydraulique

(30) Priorität: 30.12.2009 DE 102009060754
(43) Veröffentlichungstag der Anmeldung: 06.07.2011
(73) Patentinhaber: Robert Bosch GmbH, 70469 Stuttgart (DE)
(72) Erfinder: Tikkanen, Seppo Antero, Dr., 33500 Tampere (FI); Vogl, Karl-Heinz, 88444 Ummendorf (DE); Kuhse, Andreas, 89233 Neu-Ulm (DE)
(74) Vertreter: Thürer, Andreas

(56) Entgegenhaltungen:
- EP-A1- 2 119 942
- EP-A2- 0 740 091
- EP-A2- 1 223 069
- DE-A1- 4 406 736
- DE-A1- 19 858 958
- DE-C1- 4 308 198
- DE-U1-202007 014 676
- FR-A1- 2 658 259
- JP-A- 2001 182 103
- WUESTHOF P: "SEKUNDAERREGELUNG IM VERGLEICH MARKTNISCHE ODER ZUKUNFT?", O + P OLHYDRAULIK UND PNEUMATIK, VEREINIGTE FACHVERLAGE, MAINZ, DE, Bd. 43, Nr. 5, 1. Mai 1999 (1999-05-01), Seiten 376-378,380/3, XP000834226, ISSN: 0341-2660

## Beschreibung

Die Erfindung betrifft ein mobiles Arbeitsgerät gemäß dem Oberbegriff des Patentanspruchs 1.

Die Erfindung geht aus von mobilen bzw. fahrbaren Arbeitsgeräten (z.B. und Bagger und Krane), die ein Fahrwerk und ein Drehwerk haben. Mit dem Drehwerk kann ein Aufbau bzw. Oberwagen des Arbeitsgerätes gedreht werden. Das Fahrwerk und das Drehwerk werden von einer gemeinsamen Verbrennungsmaschine (z.B. Dieselmotor) über eine hydrostatische Anordnung angetrieben.

Die Druckschrift DE 44 06 736 A1 zeigt ein derartiges hydrostatisches Antriebssystem, das eine hydrostatische Pumpe und mehrere Verbraucher hat. Als Beispiel wird ein Kran genannt, bei dem einer der Verbraucher eine sekundär geregelte Hydroeinheit zum Antrieb eines Drehwerkes ist.

Der von Bosch Rexroth AG herausgegebene "Hydraulik-Trainer", Band 6, 2. Auflage, 1996 zeigt auf den Seiten 101 und 102 einen Antrieb für einen Transportmanipulator, bei dem das Fahrwerk und das Drehwerk über zwei getrennte hydraulische Kreisläufe angetrieben werden. Beide Kreisläufe sind sekundär geregelt, wobei der Fahrantrieb über einen geschlossen Kreislauf und der Drehantrieb über einen offenen Kreislauf versorgt werden.

In der gleichen Veröffentlichung auf den Seiten 96 bis 98 ist ein Antrieb für einen mobilen Hafenkran gezeigt, der einen geschlossenen Kreislauf für ein sekundär geregeltes Drehwerk hat. Das Fahrwerk des Krans wird konventionell über ein ProportionalVentil angesteuert, über das auch eine Fahrtrichtungsumkehr ermöglicht wird.

Aus der EP 1 223 069 A2 ist ein hydrostatisch angetriebenes Fahrzeug bekannt, bei dem eine von einem Dieselmotor angetriebene durchschwenkbare Verstellpumpe und zwei parallel zueinander geschaltete verstellbare Fahrmotoren in einem geschlossenen hydraulischen Kreislaufbetrieben werden.

Auch aus der DE 198 58 958 A1 ist ein hydrostatisch angetriebenes Fahrzeug bekannt, bei dem eine von einem Motor angetriebene durchschwenkbare Verstellpumpe und zwei parallel zueinander geschaltete verstellbare Fahrmotoren in einem geschlossenen hydraulischen Kreislauf betrieben werden.

Dem gegenüber liegt der Erfindung die Aufgabe zu Grunde, ein mobiles Arbeitsgerät mit den Merkmalen aus dem Oberbegriff des Patentanspruchs 1 so weiter zu entwickeln, dass auf kostengünstige Weise neben einem Fahrmotor, der mit einer durchschwenkbaren Verstellpumpe in einem geschlossenen hydraulischen Kreislauf betrieben wird, auch ein Hydromotor des Drehwerks mit Druckmittel versorgt wird.

Diese Aufgabe wird gelöst durch ein mobiles Arbeitsgerät mit den Merkmalen des Patentanspruchs 1.

Gemäß der Erfindung ist der Drehwerksmotor mit einem Niederdruckanschluss an einen Tank und mit einem Hochdruckanschluss über eine Hochdruckleitung und über eine erste verzweigende Verbindungsleitung an die eine Hauptleitung und über eine zweite verzweigende Verbindungsleitung an die andere Hauptleitung angeschlossen und ein sekundärgeregelter durchschwenkbarer Hydromotor. Auch der Fahrmotor ist ein sekundärregelbarer Hydromotor. Die Verstellpumpe ist druckregelbar. Damit ist ein mobiles Arbeitsgerät mit Fahr- und Drehwerk geschaffen, wobei in dem geschlossenen hydraulischen Kreislauf die Hochdruckseite gewechselt werden kann und das Drehwerk über eine sekundär geregelte Hydromaschine angetrieben ist. Bei konstantem Pumpendruck sind die Drehmomente beider Motoren über den Schwenkwinkel regelbar. Damit ist ein Lastgefühl für einen Bediener möglich. Die beiden Hydromotoren sind also sogenannte sekundärregelbare Hydromotoren.

Weitere vorteilhafte Ausgestaltungen der Erfindung sind in den abhängigen Patentansprüchen beschrieben.

Bei einer besonders bevorzugten Variante ist in jeder Verbindungsleitung ein Rückschlagventil angeordnet, das in Richtung von der Hauptleitung zur Hochdruckleitung und somit zum Drehwerksmotor öffnet. Dadurch kann je nach Förderrichtung der Verstellpumpe eines der Rückschlagventile öffnen, während das andere Rückschlagventil schließt. Somit steht in der Hochdruckleitung zum Drehwerksmotor immer Hochdruck zu dessen Versorgung zur Verfügung.

Bei einer anderen besonders bevorzugten Variante ist in jeder Verbindungsleitung ein Wegeventil angeordnet, das jeweils bei einer ersten Schaltstellung die Verbindungsleitung absperrt und jeweils bei einer zweiten Schaltstellung ein Rückschlagfunktion hat, die in Richtung von der Hauptleitung zur Hochdruckleitung öffnet. Dadurch kann ebenfalls je nach Förderrichtung der Verstellpumpe eines der Rückschlagventile öffnen, während das andere Rückschlagventil schließt. Somit steht in der Hochdruckleitung zum Drehwerksmotor immer Hochdruck zur Verfügung, wenn die beiden Wegeventile in die Rückschlagfunktion geschaltet sind. Eine vollkommene Trennung des Drehwerksmotors von der Pumpe und den Hauptleitungen ist über die Absperrfunktion der beiden Wegeventile möglich. Dadurch kann z.B. in einem reinen Fahrbetrieb des mobilen Arbeitsgerätes das Drehwerk festgestellt werden.

Dabei wird es bevorzugt, wenn der Fahrmotor und/oder der Drehwerksmotor auch als Pumpe betrieben werden können. Dadurch kann Bremsenergie des Fahrwerks oder des Drehwerkes in die erfindungsgemäße hydraulische Anordnung zurückgespeist werden.

Dabei wird es zur regenerativen Speicherung der Bremsenergie bevorzugt, wenn an der Hochdruckleitung oder an einer der Verbindungsleitungen zwischen dem Ventil und der Hochdruckleitung ein Druckspeicher angeschlossen ist. Dieser kann den Drehwerksmotor versorgen, auch wenn die Pumpe steht oder ihre gesamte Leistung für den Fahrmotor benötigt wird, oder er kann die Verstellpumpe bei der Versorgung des Drehwerksmotors unterstützen.

Aus Sicherheitsgründen und zur übergangsweisen Speicherung der Bremsenergie kann dem Druckspeicher ein Absperrventil vorgeschaltet werden.

Der Fahrmotor kann ein einseitig schwenkender Verstellmotor mit hohem Wirkungsgrad sein. Bei einer durchschwenkbaren Verstellpumpe und bei einem durchschwenkbaren Drehwerksmotor ist ein einseitig schwenkender Verstellmotor die kostengünstigere Ausführung.

Vorzugsweise kann der Fahrmotor proportional zu einem externen Steuersignal verstellt werden. Diese Steuerung bzw. Verstellung kann elektrisch-proportional (EP) oder hydraulisch-proportional (HD) sein.

Bei einer Variante wird die Verstellpumpe von einem meistens bei mobilen Arbeitsgeräten vorhandenen Verbrennungsmotor angetrieben.

Erfindungsgemäß kann von einer den Verbrennungsmotor und die Verstellpumpe verbindenden Antriebswelle eine weitere Verstellpumpe angetrieben werden, die niederdruckseitig mit einem Tank und hochdruckseitig mit einem Ventilblock des mobilen Arbeitsgerätes verbunden ist. Damit können andere Vorrichtungen (neben dem Fahrantrieb und dem Drehantrieb) versorgt bzw. angetrieben werden.

Bei besonders bevorzugten Weiterbildungen der erfindungsgemäßen hydraulischen Anordnung ist dem Drehwerksmotor und/oder dem Fahrmotor ein mechanisches Getriebe nachgeschaltet. Damit kann die von den zugehörigen hydraulischen Motoren abgegebene Leistung gewandelt werden.

Bei bevorzugten Ausführungsbeispielen ist das mobile Arbeitsgerät ein Bagger oder ein fahrbarer Kran.

Im Folgenden wird anhand der Zeichnung ein Ausführungsbeispiel der Erfindung detailliert beschrieben.

In der Zeichnung ist das Ausführungsbeispiel eines erfindungsgemäß ausgebildeten Baggers stark schematisch dargestellt. Die vorhandene hydraulische Anordnung überträgt die Leistung einer Welle 1 eines Dieselmotors 2 an ein Fahrwerk 4 und/oder an ein Drehwerk 6 des Baggers. Das Fahrwerk 4 hat vier über ein Fahrwerksgetriebe 7 angetriebene Räder 8. Das Drehwerk 6 treibt über ein Drehwerksgetriebe 10 ein Zahnrad 12 an, das mit einem an einem Grundaufbau des Baggers befestigten Zahnrad 14 kämmt und so den Oberwagen bzw. Aufbau des Baggers (nicht gezeigt) verdrehen kann.

Die hydraulische Anordnung hat eine über Null verschwenkbare bzw. durchschwenkbare Verstellpumpe 16, die über die Welle 1 des Dieselmotors 2 angetrieben wird. An die Verstellpumpe 16 sind zwei Hauptleitungen 18, 20 angeschlossen, wobei die Verstellpumpe 16 je nach Einstellung in beide Leitungen 18, 20 Druckmittel fördern kann.

Über die beiden Hauptleitungen 18, 20 ist ein verstellbarer Fahrmotor 22 an die Verstellpumpe 16 angeschlossen. Der Fahrmotor 22 hat eine Abtriebswelle 24, über die das Fahrwerksgetriebe 7 und somit die Räder 8 angetrieben werden.

Außerdem wird vom Dieselmotor 2 über die Welle 1 eine weitere Verstellpumpe 34 angetrieben, die Druckmittel aus einem Tank T zu einem Ventilblock 36 fördert, mit dem weitere Funktionen des Baggers, beispielsweise ein Ausleger oder ein Löffel gesteuert werden können.

Im Betrieb der erfindungsgemäßen hydraulischen Anordnung wird die vom Dieselmotor 2 angetriebene Verstellpumpe 16 derart geregelt, dass sie einen Solldruck in einer der Hauptleitungen 18, 20 aufbaut. Dabei wird die Förderrichtung der Verstellpumpe 16 in Abhängigkeit der gewünschten Fahrrichtung des Baggers gewählt.

Der über die Hauptleitungen 18, 20 angeschlossene Fahrmotor 22 ist momentengesteuert, so dass das an seine Abtriebswelle 24 abgegebene Drehmoment über den Schwenkwinkel wählbar ist. Dieser hydraulische Kreislauf ist somit sekundär geregelt.

Ein Drehwerksmotor 130 ist niederdruckseitig über eine Tankleitung 138 mit einem Tank T und hochdruckseitig über eine Hochdruckleitung 140 und über eine Verbindungsleitung 142a, 142b mit der Hauptleitung 18 oder über eine Verbindungsleitung 144a, 144b mit der Hauptleitung 20 verbunden. Durch diese Anordnung kann je nach Förderrichtung der Verstellpumpe 16 Druckmittel entweder aus der Hauptleitung 18 über die Verbindungsleitung 142a, 142b oder aus der Hauptleitung 20 über die Verbindungsleitung 144a, 144b zur Versorgung des Drehwerkmotors 130 abgezweigt werden.

Dabei wird die jeweils andere Verbindungsleitung 142a, 142b oder 144a, 144b über jeweils ein 2/2-Wegeventil 146, 147 abgesperrt, damit eine Entlastung des Druckmittels aus der Hochdruckleitung 140 zur Niederdruckseite des ersten Kreislaufs verhindert wird. Die beiden 2/2-Wegeventile 146, 147 sperren in ihrer ersten, gezeigten Stellung die jeweilige Verbindungsleitung 142a, 142b bzw. 144a, 144b ab. In einer zweiten Schaltstellung hat jedes Wegeventil 146 bzw. 147 eine Rückschlagfunktion, in der ein Zurückströmen von Druckmittel von der Hochdruckleitung 140 zur entsprechenden Hauptleitung 18 bzw. 20 verhindert wird.

Somit können über die Wegeventile 146 zwei verschiedene Betriebsmodi des Baggers gewählt werden: In einem Fahrmodus, bei dem der Bagger z. B. von einer Baustelle zur anderen gefahren wird, soll das Drehwerk 6 blockiert werden. Dazu wird bei den beiden Wegeventilen 146, 147 die gezeigte Sperrstellung gewählt und das Drehwerk 6 eventuell zusätzlich mechanisch festgelegt.

In einem Arbeitsmodus werden die beiden Ventile 146, 147 in die Rückschlagfunktion geschaltet, so dass die oben beschriebene Versorgung des Drehwerksmotors 130 in Abhängigkeit der Förderrichtung der Verstellpumpe 16 stattfinden kann. Dabei kann der Drehwerksmotor 130 über Null verstellt bzw. durchgeschwenkt werden, so dass sich die Drehrichtung der Abtriebswelle 32 und somit des Drehwerks 6 ändern lässt. Der Drehwerksmotor ist sekundärgeregelt.

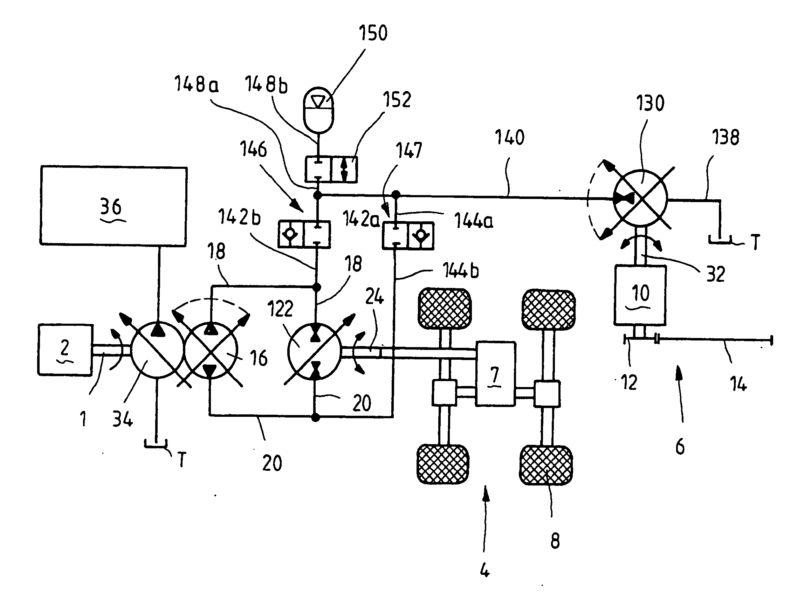

Zur Steigerung der Effizienz der erfindungsgemäßen hydraulischen Anordnung gemäß Figur 2 können der Fahrmotor 122 und der Drehwerksmotor 130 auch als Pumpe betrieben werden, wobei die Bremsenergie des zu bremsenden Baggers oder seines Aufbaus in das hydraulische System zurückgespeist werden kann. Dabei fördert der als Pumpe betriebene Fahrmotor Druckmittel durch eine der Verbindungsleitungen 142a, 142b, 144a, 144b oder der als Pumpe betriebene Drehwerksmotor 130 Druckmittel aus dem Tank T in die Hochdruckleitung 140.

Zur Speicherung und zur zeitlich unabhängigen Nutzung der entstehenden Bremsenergie zweigt von dem Teil der Verbindungsleitung 142a, der zwischen dem Wegeventil 146 und der Hochdruckleitung 140 angeordnet ist, eine Speicherleitung 148a, 148b ab, über die ein Hochdruckspeicher 150 an die erfindungsgemäße hydraulische Anordnung angeschlossen ist. In der Speicherleitung 148a, 148b ist ein Absperrventil 152 angeordnet, über das die Einspeisung der gespeicherten Bremsenergie und ihre Nutzung durch das Drehwerk 6 gesteuert werden kann.

Offenbart ist ein mobiles Arbeitsgerät mit einem hydrostatischen Fahrmotor und mit einem hydrostatischen sekundär geregelten Drehwerksmotor, die parallel von einer hydrostatischen Pumpe mit Druckmittel versorgt werden. Dabei ist die Pumpe eine über Null verschwenkbare bzw. durchschwenkbare druckgeregelte Verstellpumpe, und die beiden Motoren sind Verstellmotoren.

## Patentansprüche

1. Mobiles Arbeitsgerät mit einem Drehwerk, mit einem Fahrwerk und mit einer hydraulischen Anordnung, die einen verstellbaren hydrostatischen Drehwerksmotor (130) zum Antrieb des Drehwerks, einen verstellbaren hydrostatischen Fahrmotor (122) zum Antrieb des Fahrwerks und eine durchschwenkbare hydrostatische Verstellpumpe (16) umfasst, die mit dem Fahrmotor (122) in einem geschlossenen hydraulischen Kreislauf mit zwei zwischen Fahrmotor (122) und Verstellpumpe (16) verlaufenden Hauptleitungen (18,20) betreibbar ist, **dadurch gekennzeichnet, dass** der Drehwerksmotor (130) mit einem Niederdruckanschluss an einen Tank (T) und mit einem Hochdruckanschluss über eine Hochdruckleitung (140) und über eine erste verzweigende Verbindungsleitung (142a, 142b) an die eine Hauptleitung (18) und über eine zweite verzweigende Verbindungsleitung (144a, 144b) an die andere Hauptleitung (20) angeschlossen ist und ein sekundärgeregelter durchschwenkbarer Hydromotor ist, dass der Fahrmotor (122) sekundärregelbar ist und dass die Verstellpumpe (16) druckregelbar ist.

2. Mobiles Arbeitsgerät nach Patentanspruch 1, wobei in jeder Verbindungsleitung ein Rückschlagventil angeordnet ist, das in Richtung von der Hauptleitung zur Hochdruckleitung öffnet.

3. Mobiles Arbeitsgerät nach Patentanspruch 2, wobei in jeder Verbindungsleitung (142a, 142b, 144a, 144b) ein Wegeventil (146, 147) angeordnet ist, das jeweils bei einer ersten Schaltstellung die Verbindungsleitung (142a, 142b, 144a, 144b) absperrt und jeweils bei einer zweiten Schaltstellung ein Rückschlagfunktion hat, die in Richtung von der Hauptleitung (18, 20) zur Hochdruckleitung (140) öffnet.

4. Mobiles Arbeitsgerät nach Patentanspruch 2 oder 3, wobei der Fahrmotor (122) und/oder der Drehwerksmotor (133) als Pumpen betreibbar sind.

5. Mobiles Arbeitsgerät nach einem der Patentansprüche 2 bis 4, wobei an der Hochdruckleitung (140) oder an der Verbindungsleitung (142a, 142b) zwischen dem Wegeventil (146) und der Hochdruckleitung (140) ein Druckspeicher (150) angeschlossen ist.

6. Mobiles Arbeitsgerät nach Patentanspruch 5, wobei dem Druckspeicher (150) ein Absperrventil (152) vorgeschaltet ist.

7. Mobiles Arbeitsgerät nach einem der vorhergehenden Patentansprüche, wobei der Fahrmotor (22; 122) ein einseitig schwenkender Verstellmotor mit hohem Wirkungsgrad ist.

8. Mobiles Arbeitsgerät nach Patentanspruch 7, wobei der Fahrmotor (22; 122) proportional zu einem externen Steuersignal verstellbar ist.

9. Mobiles Arbeitsgerät nach einem der vorhergehenden Patentansprüche, wobei die Verstellpumpe (16) von einem Verbrennungsmotor (2) antreibbar ist.

10. Mobiles Arbeitsgerät nach Patentanspruch 9, wobei von einer den Verbrennungsmotor (2) und die Pumpe (16) verbindenden Welle (1) eine weitere Verstellpumpe (34) antreibbar ist, die niederdruckseitig mit einem Tank (T) und hochdruckseitig mit einem Ventilblock (36) des mobilen Arbeitsgerätes verbunden ist.

11. Mobiles Arbeitsgerät nach einem der vorhergehenden Patentansprüche, wobei dem Drehwerksmotor (30; 130) und/oder dem Fahrmotor (22; 122) ein mechanisches Getriebe (10, 7) nachgeschaltet ist.

12. Mobiles Arbeitsgerät nach einem der vorhergehenden Patentansprüche, wobei es ein Bagger oder ein fahrbarer Kran ist.

## Claims

1. Mobile working machine with a turning gear, with a travelling gear and with a hydraulic assembly which comprises an adjustable turning-gear motor (130) for driving the turning gear, an adjustable hydrostatic travel motor (122) for driving the travelling gear, and a fully pivotable hydrostatic variable-displacement pump (16) which can be operated by means of the travel motor (122) in a closed hydraulic circuit with two main lines (18, 20) running between the travel motor (122) and variable-displacement pump (16), **characterized in that** the turning-gear motor (130) is connected by means of a low-pressure connection to a tank (T) and by means of a high-pressure connection, via a high-pressure line (140) and via a first branching connection line (142a, 142b), to one main line (18) and, via a second branching connection line (144a, 144b) to the other main line (20) and is a secondary-regulated fully pivotable hydraulic motor, **in that** the travel motor (122) is secondary-regulatable, and **in that** the variable-displacement pump (16) is pressure-regulatable.

2. Mobile working machine according to Patent Claim 1, each connection line having arranged in it a non-return valve which opens in the direction from the main line to the high-pressure line.

3. Mobile working machine according to Patent Claim 2, each connection line (142a, 142b, 144a, 144b) having arranged in it a directional valve (146, 147) which in each case shuts off the connection line (142a, 142b, 144a, 144b) in a first switching position and which has in each case in a second switching position a non-return function which opens in the direction from the main line (18, 20) to the high-pressure line (140).

4. Mobile working machine according to Patent Claim 2 or 3, the travel motor (122) and/or the turning-gear motor (133) being operable as pumps.

5. Mobile working machine according to one of Patent Claims 2 to 4, a pressure accumulator (150) being connected to the high-pressure line (140) or to the connection line (142a, 142b) between the directional valve (146) and the high-pressure line (140).

6. Mobile working machine according to Patent Claim 5, the pressure accumulator (150) being preceded by a shut-off valve (152).

7. Mobile working machine according to one of the preceding patent claims, the travel motor (22, 122) being a unilaterally pivoting variable-displacement motor with high efficiency.

8. Mobile working machine according to Patent Claim 7, the travel motor (22; 122) being adjustable in proportion to an external control signal.

9. Mobile working machine according to one of the preceding patent claims, the variable-displacement pump (16) being drivable by an internal combustion engine (2).

10. Mobile working machine according to Patent Claim 9, a further variable-displacement pump (34) being drivable by a shaft (1) connecting the internal combustion engine (2) and the pump (16), which further variable-displacement pump is connected on the low-pressure side to a tank (T) and on the high-pressure side to a valve block (36) of the mobile working machine.

11. Mobile working machine according to one of the preceding patent claims, the turning-gear motor (30; 130) and/or the travel motor (22; 122) being followed by a mechanical transmission (10, 7).

12. Mobile working machine according to one of the preceding patent claims, being an excavator or a travelling crane.

## Revendications

1. Engin de travail mobile avec un mécanisme de rotation, avec un mécanisme de roulement et un agencement hydraulique, qui comprend un moteur de mécanisme de rotation hydrostatique réglable (130) pour l'entraînement du mécanisme de rotation, un moteur de conduite hydrostatique réglable (122) pour l'entraînement du mécanisme de roulement, et une pompe à débit variable hydrostatique pivotante (16) qui peut être entraînée avec le moteur de conduite (122) dans un circuit hydraulique fermé avec deux conduites principales (18, 20) s'étendant entre le moteur de conduite (122) et la pompe à débit variable (16), **caractérisé en ce que** le moteur du mécanisme de rotation (130) est raccordé par un raccord basse pression à un réservoir (T) et par un raccord haute pression par le biais d'une conduite haute pression (140) et par le biais d'une première conduite de liaison ramifiée (142a, 142b) à l'une (18) des conduites principales et par le biais d'une deuxième conduite de liaison ramifiée (144a, 144b) à l'autre conduite principale (20), et est un moteur hydraulique pivotant à régulation secondaire, **en ce que** le moteur de conduite (122) peut être réglé de manière secondaire et **en ce que** la pompe à débit variable (16) peut être régulée en pression.

2. Engin de travail mobile selon la revendication 1, dans lequel, dans chaque conduite de liaison, est disposé un clapet anti-retour qui s'ouvre dans la direction de la conduite principale vers la conduite haute pression.

3. Engin de travail mobile selon la revendication 2, dans lequel, dans chaque conduite de liaison (142a, 142b, 144a, 144b), est disposée une soupape de distribution (146, 147), qui bloque à chaque fois la conduite de liaison (142a, 142b, 144a, 144b) dans une première position de commutation et qui présente à chaque fois une fonction de retenue dans une deuxième position de commutation, qui ouvre dans la direction de la conduite principale (18, 20) vers la conduite haute pression (140).

4. Engin de travail mobile selon la revendication 2 ou 3, dans lequel le moteur de conduite (122) et/ou le moteur du mécanisme de rotation (133) peuvent fonctionner en tant que pompes.

5. Engin de travail mobile selon l'une quelconque des revendications 2 à 4, dans lequel un accumulateur de pression (150) est raccordé au niveau de la conduite haute pression (140) ou au niveau de la conduite de liaison (142a, 142b) entre la soupape de distribution (146) et la conduite haute pression (140).

6. Engin de travail mobile selon la revendication 5, dans lequel une soupape d'arrêt (152) est montée avant l'accumulateur de pression (150).

7. Engin de travail mobile selon l'une quelconque des revendications précédentes, dans lequel le moteur de conduite (22 ; 122) est un moteur de réglage pivotant d'un côté, avec un haut rendement.

8. Engin de travail mobile selon la revendication 7, dans lequel le moteur de conduite (22 ; 122) peut être réglé de manière proportionnelle à un signal de commande externe.

9. Engin de travail mobile selon l'une quelconque des revendications précédentes, dans lequel la pompe à débit variable (16) peut être entraînée par un moteur à combustion interne (2).

10. Engin de travail mobile selon la revendication 9, dans lequel une autre pompe à débit variable (34) peut être entraînée par un arbre (1) reliant le moteur à combustion interne (2) et la pompe (16), laquelle autre pompe est connectée du côté basse pression à un réservoir (T) et du côté haute pression à un bloc soupape (36) de l'engin de travail mobile.

11. Engin de travail mobile selon l'une quelconque des revendications précédentes, dans lequel une transmission mécanique (10, 7) est montée après le moteur du mécanisme de rotation (30 ; 130) et/ou le moteur de conduite (22 ; 122).

12. Engin de travail mobile selon l'une quelconque des revendications précédentes, dans lequel il s'agit d'une pelleteuse ou d'une grue mobile.
